# EUROPEAN PATENT APPLICATION

(11) **EP 4 151 667 A1**
(43) Date of publication of application: **22.03.2023**
(21) Application number: 21804764.5
(22) Date of filing: 06.05.2021
(51) Int. Cl.: C08G 64/04, C08J 3/20, C08J 11/12, C08K 7/06, C08L 69/00

(54) **COMPOSITION, PELLET, MOLDED PRODUCT AND COMPOSITION PRODUCTION METHOD**

(30) Priority: 12.05.2020 JP 2020083744; 09.12.2020 JP 2020204358
(71) Applicant: Mitsubishi Engineering-Plastics Corporation, Tokyo 105-0021 (JP); Shinryo Corporation, Kitakyushu-shi, Fukuoka, 806-0021 (JP)
(72) Inventor: NISHINO Yohei, Hiratsuka-shi, Kanagawa 254-0016 (JP); TAKADA Seiichi, Hiratsuka-shi, Kanagawa 254-0016 (JP); ARITA Hiroyuki, Kitakyushu-shi, Fukuoka 806-0021 (JP)
(74) Representative: Hoffmann Eitle
(86) International application number: PCT/JP2021/017374
(87) International publication number: WO 2021/230132

(57) **Abstract**

To provide a composition that contains a polycarbonate resin and a recycled carbon fiber, and demonstrates mechanical strength which is made close as possible to that of the case where the virgin carbon fiber is blended, and, a pellet, a molded article, and a method for producing the composition. The composition contains 100 parts by mass of a polycarbonate resin having a terminal hydroxy group content of 150 to 800 ppm; and 5 to 65 parts by mass of a recycled carbon fiber which is a heated product of a carbon fiber-reinforced resin.

## Description

### TECHNICAL FIELD

This invention relates to a composition, a pellet, a molded article, and a method for producing a composition, and particularly to a composition making effective use of a recycled carbon fiber.

### BACKGROUND ART

Polycarbonate resin has been used in many fields, as a resin that excels in heat resistance, impact resistance, transparency and so forth. In particular, polycarbonate resin composition reinforced with inorganic filler such as glass fiber or carbon fiber has been widely used in industrial fields including camera, OA equipment and electric/electronic components, for its excellent performances including dimensional stability, mechanical strength, heat resistance, and electrical characteristics, (Patent Literature 1).

Meanwhile, recycling of carbon fiber has been discussed from the viewpoint of effective utilization of limited resources. Known recycled carbon fibers are exemplified by those described in Patent Literature 2.

### CITATION LIST

### PATENT LITERATURE

[Patent Literature 1] JP 2011-063812 A
[Patent Literature 2] WO2018/212016

### SUMMARY OF THE INVENTION

### TECHNICAL PROBLEM

Blending of the recycled carbon fiber to the polycarbonate resin would however degrade the mechanical strength, as compared with a case where a newly prepared carbon fiber, or virgin carbon fiber, is blended. Recycling rate of carbon fiber is expected to improve, if the mechanical strength of the composition, containing the polycarbonate resin and the recycled carbon fiber, could be made close as possible to that of the case where the virgin carbon fiber is blended.

This invention is aimed at solving the issue, and is to provide a composition that contains a polycarbonate resin and a recycled carbon fiber, and demonstrates mechanical strength which is made close as possible to that of the case where the virgin carbon fiber is blended, and, a pellet, a molded article, and a method for producing the composition.

### SOLUTION TO PROBLEM

The present inventors conducted research to address the above-mentioned problems, and as a result, discovered that the above problems could be solved by using the polycarbonate resin having a terminal hydroxy group content of 150 to 800 ppm and by using the recycled carbon fiber which is a heated product of a carbon fiber-reinforced resin.

Specifically, the problems described above are solved by the following means.
<1> A composition comprising:
   100 parts by mass of a polycarbonate resin having a terminal hydroxy group content of 150 to 800 ppm; and 5 to 65 parts by mass of a recycled carbon fiber which is a heated product of a carbon fiber-reinforced resin.
<2> The composition of <1>, wherein the terminal hydroxy group content is 200 to 800 ppm.
<3> The composition of <1> or <2>, wherein a ratio of the resin residue content in the recycled carbon fiber is 5% by mass or larger.
<4> The composition of any one of <1> to <3>, wherein flexural strength, measured in compliance with ISO 178, of an ISO multipurpose test specimen formed of the composition is retained by a retention rate of 86% or larger, as compared with flexural strength, measured in compliance with ISO 178, of an ISO multipurpose test specimen formed of a composition that is modified from the aforementioned composition by replacing the polycarbonate resin with an equal amount of a polycarbonate resin having a terminal hydroxy group content of 140 ppm, and by replacing the recycled carbon fiber with a virgin carbon that makes the carbon fiber content equal.
<5> The composition of any one of <1> to <4>, wherein the polycarbonate resin contains a recycled polycarbonate resin.
<6> The composition of any one of <1> to <5>, further comprising 0.5 to 30 parts by mass of a flow modifier, per 100 parts by mass of the polycarbonate resin having a terminal hydroxy group content of 150 to 800 ppm.
<7> The composition of any one of <1> to <6>, further comprising 0.1 to 10 parts by mass in total of at least one selected from mold releasing agent and carbon black, per 100 parts by mass of the polycarbonate resin having a terminal hydroxy group content of 150 to 800 ppm.
<8> A pellet formed of the composition described in any one of <1> to <7>.
<9> A molded article formed of the composition described in any one of <1> to <7>.
<10> A method for producing a composition comprising:
   feeding in to extruder 100 parts by mass of a polycarbonate resin having a terminal hydroxy group content of 150 to 800 ppm, and 5 to 65 parts by mass of a recycled carbon fiber which is a heated product of a carbon fiber-reinforced resin, followed by melt kneading.

### ADVANTAGEOUS EFFECTS OF INVENTION

This invention is the first to provide a composition that contains a polycarbonate resin and a recycled carbon fiber, and demonstrates mechanical strength which is made close as possible to that of the case where the virgin carbon fiber is blended, and, a pellet, a molded article, and a method for producing the composition.

### DESCRIPTION OF EMBODIMENTS

Embodiments for carrying out this invention (simply referred to as "this embodiment", hereinafter) will be detailed below. The embodiments below are merely illustrative, so that this invention is not limited solely to these embodiments.

Note that all numerical ranges given in this patent specification, with "to" preceded and succeeded by numerals, are used to represent the ranges including these numerals respectively as the lower and upper limit values.

Various physical properties and characteristic values mentioned herein are those demonstrated at 23°C, unless otherwise specifically noted.

The term "process" in this patent specification encompasses not only an independent process, but also any process that is not clearly distinguishable from other process but can demonstrate a desired action of the process.

In this patent specification, ppm means ppm by mass.

The composition of this embodiment specifically contains 5 to 65 parts by mass of a recycled carbon fiber which is a heated product of a carbon fiber-reinforced resin, per 100 parts by mass of a polycarbonate resin having a terminal hydroxy group content of 150 to 800 ppm. With such structure, obtainable is a composition that contains a polycarbonate resin and a recycled carbon fiber, and demonstrates mechanical strength which is made close as possible to that of the case where a virgin carbon fiber is blended. The reason is presumed as below. That is, adhesiveness between the surface of the carbon fiber and the polycarbonate resin improved, and the mechanical strength consequently increased, presumably because the terminal hydroxy group content of the polycarbonate resin was adjusted to 150 to 800 ppm.

Too little content of the terminal hydroxy group would decrease the adhesiveness between the surface of the carbon fiber and the polycarbonate resin, and would also decrease rate of transesterification, making it difficult to produce the polycarbonate resin having a desired molecular weight, or producing odor during forming or from the molded article, due to an increased amount of residual carbonate ester in the polycarbonate resin. In contrast, too much content of the terminal hydroxy group content would tend to degrade heat stability of the polycarbonate resin.

According to this embodiment, the composition that particularly excels in the flexural strength is obtainable. The composition can also achieve physical properties including flexural modulus, Charpy notched impact strength, Charpy unnotched impact strength, and deflection temperature under load (DTUL) which are considerably close to those of the case where the virgin carbon fiber is used.

This invention will be detailed below.

### <Polycarbonate Resin>

The composition of this embodiment contains a polycarbonate resin having a terminal hydroxy group content of 150 to 800 ppm. With use of the polycarbonate resin having a terminal hydroxy group content of 150 to 800 ppm, the adhesiveness with surface of the recycled carbon fiber may be improved, and may keep the mechanical strength at a higher level as compared with a case where a polycarbonate resin having a terminal hydroxy group content of less than 150 ppm is blended.

The terminal hydroxy group content, although specified as 150 ppm or more, is preferably 200 ppm or more, more preferably 250 ppm or more, even more preferably 300 ppm or more, yet more preferably 350 ppm or more, furthermore preferably 400 ppm or more, again furthermore preferably 450 ppm or more, and particularly preferably 500 ppm or more. At or above the lower limit value, expectable tendencies include that the adhesiveness between the surface of the carbon fiber and the polycarbonate resin may improve, that a reaction rate of transesterification may increase to make it more easily to obtain a polycarbonate resin having a desired molecular weight, that the amount of residual carbonate ester in the polycarbonate resin may decrease, and that odor during forming or from the molded article is more effectively suppressed. Meanwhile, the terminal hydroxy group content, although specified as 800 ppm or less, is preferably 750 ppm or less, more preferably 700 ppm or less, even more preferably 650 ppm or less, yet more preferably 630 ppm or less, and may even be 610 ppm or less. At or below the upper limit value, the polycarbonate resin will tend to have more improved heat stability.

The terminal hydroxy group content may be measured according to the description in the later-described EXAMPLES.

In a case where the composition of this embodiment contains two or more kinds of polycarbonate resin, the terminal hydroxy group content means that of the polycarbonate resin mixture.

The polycarbonate resin having a terminal hydroxy group content of 150 to 800 ppm may be produced typically by melt polymerization. A mixture of polycarbonate resins, obtained by melt polymerization and interfacial polymerization, is also acceptable.

More specifically, the polycarbonate resin used in this embodiment is preferably an aromatic polycarbonate resin, which may typically be produced by using aromatic dihydroxy compound and carbonate diester as raw materials, by melt transesterification.

The aromatic dihydroxy compound is exemplified by bis(4-hydroxydiphenyl)methane, 2,2-bis(4-hydroxyphenyl)propane, 2,2-bis(4-hydroxy-3-methylphenyl)propane, 2,2-bis(4-hydroxy-3-*t-*butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'-tetramethyl-4,4'-dihydroxybiphenyl, bis(4-hydroxyphenyl) sulfone, bis(4-hydroxyphenyl) sulfide, bis(4-hydroxyphenyl) ether, and bis(4-hydroxyphenyl) ketone. Only one kind of these aromatic dihydroxy compounds may be used independently, or two or more kinds may be mixed for use. Among them, preferred is 2,2-bis(4-hydroxyphenyl)propane (also referred to as "bisphenol A" hereinafter, and may occasionally be abbreviated as "BPA").

The carbonate diester is typically exemplified by substituted diphenyl carbonate represented by diphenyl carbonate, ditolyl carbonate and so forth; and dialkyl carbonate represented by dimethyl carbonate, diethyl carbonate, di-*t*-butyl carbonate and so forth. Only one kind of these carbonate diesters may be used independently, or two or more kinds may be mixed for use. Among them, preferred are diphenyl carbonate (may occasionally abbreviated as "DPC" hereinafter), and substituted diphenyl carbonate.

The carbonate diester may be replaced with dicarboxylic acid or dicarboxylic ester, preferably up to an extent of 50 mol% or less, and more preferably 30 mol% or less. Representative dicarboxylic acid or dicarboxylic ester is exemplified by terephthalic acid, isophthalic acid, diphenyl terephthalate, and diphenyl isophthalate. Replacement with such dicarboxylic acid or dicarboxylic ester yields polyester carbonate resin.

Such carbonate diester (including the substituted dicarboxylic acid or dicarboxylic ester, the same will apply hereinafter) is used usually excessively to the aromatic dihydroxy compound. That is, the carbonate diester is used within the range from 1.001 to 1.3 times, and preferably 1.01 to 1.2 times as much as the mole amount of the aromatic dihydroxy compound.

The polycarbonate resin used in this embodiment preferably contains a bisphenol A-derived structural unit whose content accounts for 80 mol% or more (preferably 90 mol% or more, and more preferably 95 mol% or more) of all structural units excluding the terminal group.

Detail of the polycarbonate resin having a terminal hydroxy group content of 150 to 800 ppm may be understood referring to the description of JP 2003-026911 A, the content of which is incorporated herein by reference.

The polycarbonate resin used in this embodiment (a mixture of the polycarbonate resins when two or more kinds are contained) preferably demonstrates a melt volume rate (MVR) of 1 cm³/10 min or larger, more preferably 5 cm³/10 min or larger, and even more preferably 8 cm³/10 min or larger, meanwhile preferably 40 cm³/10 min or smaller, and more preferably 30 cm³/10 min or smaller. At or above the lower limit value, and particularly at or above 5 cm³/10 min, the polycarbonate resin will be more fluidic and will tend to more excel in formability, meanwhile at or below the upper limit value, the impact resistance and heat resistance tend to be kept at high levels. MVR may be measured in compliance with JIS K7210.

The polycarbonate resin used in this embodiment (a mixture of the polycarbonate resins when two or more kinds are contained) preferably has a viscosity-average molecular weight of 5000 to 50000, which is more preferably 10000 to 50000, and even more preferably 14000 to 24000. With use of the polycarbonate resin having a viscosity-average molecular weight of 5000 or larger, the obtainable molded article will tend to have improved mechanical strength. Meanwhile, with use of the polycarbonate resin having a viscosity-average molecular weight of 50000 or smaller, the resin composition tends to have improved fluidity, and consequently have improved formability.

The viscosity-average molecular weight [Mv] of the polycarbonate resin is converted from solution viscosity measured at 25°C with use of methylene chloride as a solvent.

The polycarbonate resin used in this embodiment may be a recycled polycarbonate resin. With use of the recycled polycarbonate resin, the composition may be provided while reducing environmental load. The recycled polycarbonate resin used here may be those derived from bottle, disk, pachinko (Japanese pinball) machine, sheet, semiconductor transporting vessel and so forth. The recycled polycarbonate resin is preferably recycled aromatic polycarbonate resin.

In the composition of this embodiment, the content of the polycarbonate resin is preferably 60 to 95% by mass. The composition of this embodiment may contain only one kind of the polycarbonate resin, or may contain two or more kinds. In a case where two or more kinds are contained, the total content preferably falls in the aforementioned range.

### <Recycled Carbon Fiber>

The composition of this embodiment contains 5 to 65 parts by mass of the recycled carbon fiber which is a heated product of the carbon fiber-reinforced resin. With use of such recycled carbon fiber in combination with a predetermined polycarbonate resin, the resin composition can keep the mechanical strength at a higher level, as compared with a composition in which the polycarbonate resin is blended with virgin carbon fiber. The recycled carbon fiber, usually having no treatment agent such as surface treatment agent or sizing agent, would sometimes become difficult to be fully melt-kneaded with the polycarbonate resin. This embodiment, with use of the heated product of the carbon fiber-reinforced resin as the recycled carbon fiber, however enables stable melt-kneading with the polycarbonate resin, since a carbide which is a resin-derived residue can act like a treatment agent for the carbon fiber.

Now, the recycled carbon fiber typically means carbon fiber recovered from used carbon fiber-reinforced resin (aircraft, vehicle, electric/electronic equipment, etc.); and carbon fiber recovered from scrap, for example, of intermediate product (prepreg) of the carbon fiber-reinforced resin output from production process of the carbon fiber-reinforced resin. In contrast, the virgin carbon fiber means brand new carbon fiber, typically any of those marketed as carbon fibers, but not the recycled carbon fiber.

In this embodiment, the heated product of the carbon fiber-reinforced resin is used as the recycled carbon fiber. Heating of the carbon fiber-reinforced resin converts the resin into carbide, which remains on the surface of the carbon fiber.

The carbon fiber-reinforced resin in this embodiment contains the carbon fiber and a matrix resin.

The carbon fiber, although the type of which is not specifically limited, is preferably PAN-based carbon fiber.

The matrix resin may be thermosetting resin or thermoplastic resin. The thermosetting resin may be uncured product, or cured product. The thermosetting resin is exemplified by epoxy resin, unsaturated polyester resin, vinyl ester resin, phenol resin, cyanate resin, and polyimide resin. The thermoplastic resin is exemplified by polyamide, polyolefin, polyester, polycarbonate, acryl resin, acrylonitrile-butadienestyrene copolymer, polyether ether ketone, and polyphenylene sulfide.

The matrix resin may contain optional additive. The additive is exemplified by curing agent, curing aid, internal mold releasing agent, antioxidant, light stabilizer, UV absorber, and colorant.

Heating temperature of the carbon fiber-reinforced resin, although not specifically limited so long as the matrix resin may be carbonized, is preferably 300 to 700°C, more preferably 400 to 700°C, and even more preferably 500 to 700°C.

Details of the recycled carbon which is the heated product of the carbon fiber-reinforced resin may be understood referring to the description in WO2018/212016, the content of which is incorporated herein by reference.

Ratio of the resin residue content in the recycled carbon fiber is preferably 5% by mass or more, more preferably 10% by mass or more, meanwhile preferably 20% by mass or less, and more preferably 15% by mass or less.

Number-average fiber diameter of the recycled carbon fiber is preferably 3 µm or larger, and more preferably 4 µm or larger, meanwhile preferably 10 µm or smaller, and more preferably 8 um or smaller. With the number-average fiber diameter of the recycled carbon fiber fallen within these ranges, the resin composition with further improved mechanical properties, particularly strength and elastic modulus, will be obtainable more easily.

In the composition of this embodiment, content of the recycled carbon fiber, which is a heated product of the carbon fiber-reinforced resin, is 5 parts by mass or more per 100 parts by mass of the polycarbonate resin, which is more preferably 8 parts by mass or more, and may even be 10 parts by mass or more, 13 parts by mass or more, and 15 parts by mass or more. At or above the lower limit value, the composition that further excels in mechanical strength tends to be obtainable. Meanwhile, the content of the recycled carbon fiber, per 100 parts by mass of the polycarbonate resin, is 65 parts by mass or less, preferably 60 parts by mass or less, more preferably 55 parts by mass or less, and may even be 50 parts by mass or less, and 45 parts by mass or less. At or below the upper limit value, the composition that further excels in mechanical strength and formability tends to be obtainable.

The composition of this embodiment preferably contains the recycled carbon fiber, which is a heated product of the carbon fiber-reinforced resin, whose content accounts for 5 to 40% by mass in the composition, in terms of substantial carbon fiber content, and more preferably accounts for 10 to 30% by mass.

The composition of this embodiment may contain only one kind of, or two or more kinds of the recycled carbon fiber, which is a heated product of the carbon fiber-reinforced resin. In a case where two or more kinds are contained, the total content preferably falls in the aforementioned range.

In the composition of this embodiment, total content of the polycarbonate resin having a terminal hydroxy group content of 150 to 800 ppm and the recycled carbon fiber preferably accounts for 90% by mass or more of the composition, more preferably accounts for 95% by mass or more, and even more preferably accounts for 97% by mass or more. The upper limit of the total content is 100% by mass.

The composition of this embodiment may contain the virgin carbon fiber, but not necessarily. An exemplary composition of this embodiment contains the virgin carbon fiber which amounts 5 to 50% by mass (preferably 5 to 30% by mass) of the content of the recycled carbon fiber. Another exemplary composition of this embodiment contains the virgin carbon fiber which amounts less than 5% by mass (preferably less than 3% by mass, and more preferably less than 1% by mass) of the content of the recycled carbon fiber.

### <Flow Modifier>

The composition of this embodiment preferably contains 0.5 to 30 parts by mass of a flow modifier, per 100 parts by mass of the polycarbonate resin having a terminal hydroxy group content of 150 to 800 ppm. With the flow modifier contained therein, the polycarbonate resin will have improved fluidity, while keeping the flexural strength.

The flow modifier used in this embodiment may be any of known ones, and may be low molecular weight compound or oligomer (number-average molecular weight < 2000), or may be high molecular weight compound (number-average molecular weight ≥ 2000). In this embodiment, for example, an oligomer having a number-average molecular weight of 1000 or larger and smaller than 2000 may be used.

The flow modifier is specifically exemplified by polyester oligomer, polycarbonate oligomer, polycaprolactone, low molecular weight acrylic copolymer, and aliphatic rubber-polyester block copolymer, wherein polycarbonate oligomer is preferred. The flow modifier may be understood referring to the descriptions in paragraphs [0050] to [0056] of JP 4736260 B, and in paragraphs
to [0070] of JP 2011-063812 A, the contents of which are incorporated herein by reference.

In the composition of this embodiment, content of the flow modifier is preferably 0.5 parts by mass or more, per 100 parts by mass of the polycarbonate resin having a terminal hydroxy group content of 200 to 800 ppm, more preferably 1 part by mass or more, even more preferably 2 parts by mass or more, yet more preferably 3 parts by mass or more, and furthermore preferably 5 parts by mass or more. At or above the lower limit value, the polycarbonate resin tends to further improve the fluidity. Meanwhile, the content of the flow modifier is preferably 30 parts by mass or less, more preferably 25 parts by mass or less, even more preferably 20 parts by mass or less, yet more preferably 17 parts by mass, and furthermore preferably 15 parts by mass or less. At or below the upper limit value, the polycarbonate resin tends to further improve the fluidity, without degrading the heat resistance and impact resistance.

The composition of this embodiment may contain only one kind of, or two or more kinds of the flow modifier. In a case where two or more kinds are contained, the total content preferably falls in the aforementioned range.

### <Other Ingredients>

The composition of this embodiment may contain ingredient other than the aforementioned ingredients. Such other ingredients are exemplified by thermoplastic resin other than polycarbonate resin, dye, pigment, impact resistance modifier, antistatic agent, slipping agent, anti-blocking agent, mold releasing agent, anti-clouding agent, natural oil, synthetic oil, wax, and organic filler. The total content of these ingredients may typically be 0.1 to 10% by mass of the composition.

The composition of this embodiment is typically such as containing 0.1 to 10 parts by mass (preferably 0.5 to 5 parts by mass) in total of at least one ingredient selected from mold releasing agent and carbon black, per 100 parts by mass of the polycarbonate resin having a terminal hydroxy group content of 150 to 800 ppm.

### <Physical Properties of Composition>

The composition of this embodiment preferably demonstrates high flexural strength close to that demonstrated by a case where the virgin carbon fiber is blended to the polycarbonate resin.

In the composition of this embodiment, the flexural strength, measured in compliance with ISO 178, of an 80 mm × 10 mm × 4 mm thick flat specimen with use of the ISO multipurpose test specimen formed of the composition (for example, an 80 mm × 10 mm × 4 mm thick flat specimen cut out from the ISO multipurpose test specimen) is preferably retained by a retention rate of 86% or larger, as compared with the flexural strength, measured in compliance with ISO 178, of an 80 mm × 10 mm × 4 mm thick flat specimen formed of a composition that is modified from the aforementioned composition by replacing the polycarbonate resin with an equal amount of a polycarbonate resin having a terminal hydroxy group content of 140 ppm, and by replacing the recycled carbon fiber with a virgin carbon fiber that makes the carbon fiber content equivalent. The retention rate is more preferably 88% or larger, and even more preferably 90% or larger. The upper limit value of the retention rate, although ideally 100%, is practically 99% or smaller.

### <Method for Producing Composition>

The composition of this embodiment may be produced by any of ordinary methods for producing composition that contains polycarbonate resin. The composition of this embodiment may be produced typically by feeding to an extruder 100 parts by mass of a polycarbonate resin having a terminal hydroxy group content of 150 to 800 ppm, and 5 to 65 parts by mass of a recycled carbon fiber which is a heated product of a carbon fiber-reinforced resin, followed by melt kneading. Although some recycled carbon fiber would have no surface treatment agent or sizing agent adhered on the surface thereof, the recycled carbon fiber used in this embodiment is a heated product of a carbon fiber-reinforced resin, so that a residue derived from the resin can act as a surface treatment agent, enabling melt kneading in the extruder. Hence, a pellet formed of the composition of this embodiment is obtainable.

The individual ingredients may be premixed and fed to the extruder at a time, or may be fed through a feeder to the extruder, without being premixed, or after premixing only a part of them. The extruder may be a single-screw extruder, or a twinscrew extruder. Alternatively, a part of the ingredients such as dye and pigment (carbon black, for example) may be melt-kneaded with a resin ingredient to prepare a master batch, to which the residual ingredients may be added and melt-kneaded.

The carbon fiber is also preferably fed through a side feeder arranged in the middle of a cylinder of the extruder.

Heating temperature during the melt-kneading is suitably selectable from a usual range from 250 to 350°C.

The molded article of this embodiment is formed of the composition of this embodiment.

The molded article of this embodiment excels in the mechanical strength, and is therefore applicable to various purposes, including various storage containers, electric/electronic equipment, office automation (OA) equipment, component for home electric appliance, component for machine and mechanism, and component for vehicle mechanism.

### <Method for Manufacturing Molded article>

Method for manufacturing a molded article is freely selectable without special limitation from forming methods usually employed for composition that contains polycarbonate resin. Examples of the method include injection molding, ultrahigh-speed injection molding, injection compression molding, two color molding, hollow molding such as gas-assisted molding, molding with use of heat insulation dies, molding with use of rapid heating dies, foam molding (including supercritical fluid), insert molding, IMC (in-mold coating) molding, extrusion molding, sheet forming, thermoforming, rotational molding, laminate molding, press molding and blow molding. Among them, injection molding is preferred.

Details of the injection molding may be understood referring to the description in paragraphs [0113] to [0116] of JP 6183822 B, the content of which is incorporated herein by reference.

### EXAMPLES

This invention will further be detailed referring to Examples. All materials, amounts of consumption, ratios, process details and procedures described in Examples below may suitably be modified, without departing from the spirit of this invention. Hence, the scope of this invention is by no means limited to specific Examples below.

In a case where any measuring instrument used in EXAMPLES become unavailable typically due to discontinuation, the measurement may be conducted with use of other instrument having equivalent performances.

### 1. Raw Materials

Raw ingredients used in Examples and Comparative Examples below are listed in Table 1.

**[Table 1]**

| Ingredient | Abbrev. | |
|---|---|---|
| (A1) Aromatic PC resin obtained by interfacial polymerization | A1 | Trade name: lupilon (registered trademark) S-3000FN, from Mitsubishi Engineering-Plastics Corporation |
| | | Viscosity-average molecular weight Mv: 21,000, MVR: 13 cm³/10 min |
| | | Terminal hydroxy group content: 140 ppm |
| (A2) Aromatic PC resin obtained by melt transesterification | A2-1 | Trade name: Novarex (registered trademark) 7022J from Mitsubishi Engineering-Plastics Corporation |
| | | Viscosity-average molecular weight Mv: 22,000, MVR: 13 cm³/10 min |
| | | Terminal hydroxy group content: 530 ppm |
| | A2-2 | Trade name: Novarex (registered trademark) 7019J from Mitsubishi Engineering-Plastics Corporation |
| | | Viscosity-average molecular weight Mv: 18,000, MVR: 20 cm³/10 min |
| | | Terminal hydroxy group content: 590 ppm |
| | A2-3 | Trade name: Novarex (registered trademark) 7027BF from Mitsubishi Engineering-Plastics Corporation |
| | | Viscosity-average molecular weight Mv: 25,000, MVR: 3 cm³/10 min |
| | | Terminal hydroxy group content: 900 ppm |
| (A3) Recycled aromatic PC resin | A3-1 | Trade name: PCRGB-WBPC, from Anqing Hongyu Chemical Co., Ltd. |
| | | MVR: 9 cm³/10 min |
| | | Terminal hydroxy group content: 750 ppm |
| | A3-2 | Trade name: PC-50S, from Anqing Hongyu Chemical Co., Ltd. |
| | | MVR: 62 cm³/10 min |
| | | Terminal hydroxy group content: 450 ppm |
| (B1) Virgin carbon fiber | B1-1 | Trade name: TR06UL, from Mitsubishi Chemical Corporation |
| | | Number-average fiber diameter: 6 µm, Sizing agent: urethane-based, 2.5% by mass |
| | | Resin residue content: 0% by mass |
| | B1-2 | Carbon fiber obtained by washing virgin carbon fiber B1-1 with solvent to remove sizing agent |
| | | Number-average fiber diameter: 6 µm, Sizing agent: 0% by mass |
| | | Resin residue content: 0 % by mass |
| (B2) Recycled carbon fiber | B2 | Recycled carbon fiber obtaind by heating carbon fiber reinforced resin |
| | | Number-average fiber diameter: 6 µm, Sizing agent: 0% by mass |
| | | Resin residue content: 13 % by mass |
| (C) Flow modifier | C | Trade name: AL071 from Mitsubishi Gas Chemical Company, Inc. |
| | | Number-average molecular weight: 1,500 |
| | | Polycarbonate oligomer |
| (0) Mold releasing agent | D | Trade name: Licowax PE520, from Clariant Japan K.K. |
| | | Polyethylene wax |
| (E) Carbon black | E | Trade name: BP800 from Cabot Corporation |
| | | Particle size: 17 µm cm³/100 |
| | | Nitrogen adsorption-based specific surface area: 210 m²/g, DBP absorption: 68 g |

### <Terminal Hydroxy Group Content in PC>

The terminal hydroxy group content of the aromatic polycarbonate resin (PC resin) means the total content of the terminal hydroxy group illustrated below, which is a mass proportion of the terminal hydroxy group relative to the mass of the aromatic polycarbonate resin expressed in ppm. The method of measurement was in compliance with colorimetric quantification based on titanium tetrachloride/acetic acid method (the method described in Macromol. Chem., 88, 215 (1965)).

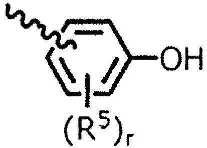

In the formula, each R⁵ represents a group selected from halogen atom, nitro group, cyano group, alkyl group having 1 to 20 carbon atoms, alkoxycarbonyl group having 2 to 20 carbon atoms, cycloalkyl group having 4 to 20 carbon atoms, and aryl group having 6 to 20 carbon atoms; and r represents an integer of 0 to 2. When r represents 2, two (R⁵)s may be same or different. The wavy line indicates a site of bonding with the principal chain of the polycarbonate resin.

### 2. Examples and Comparative Examples

### (Examples 1-1 to 1-12, Comparative Examples 1-1 to 1-4, Examples 2-1, 2-2, Comparative Examples 2-1 to 2-3, Examples 3-1, 3-2, Comparative Examples 3-1 to 3-3)

### < Compounding >

The individual ingredients listed in Tables 2 to 5 were mixed according to the contents summarized in the tables (all in parts by mass), and kneaded with use of a twin screw extruder having a single vent, into which the ingredients excluding the carbon fiber were fed through a barrel arranged at the upstream part of the extruder, and the carbon fiber was side-fed, under conditions including a screw speed of 300 rpm, an injection volume of 200 kg/h, and barrel temperature of 280 to 310°C. The molten resin composition extruded into strands was quenched in a water bath, and pelletized with use of a pelletizer, to produce a pellet.

### <CF Content in Composition>

"CF content" in Tables 2 to 5 represents a content of substantial carbon fiber in the composition. That is, the recycled carbon fiber used in this invention, since being a heated product of a carbon fiber-reinforced resin, contains a residue derived from the resin (resin residue). The content of carbon fiber excluding the resin residue corresponds to the CF content in Tables. The unit is % by mass.

### <CF Feedability during Compounding>

Feed stability of the carbon fiber during pelletizing was judged according to the criteria A and B below. Five experts participated in the test, and made a decision by majority vote.
A: carbon fiber stably feedable with minimum fluctuation; and
B: not A, such that feeding of carbon fiber largely fluctuates, making feeding unstable, and making compounding not possible.

### <Molding of Test Specimen>

The obtained pellet was dried at 120°C for 5 hours, and injection-molded with use of an injection molding machine ("J85AD" from The Japan Steel Works, Ltd.), at a cylinder temperature of 300°C, a die temperature of 100°C, and a molding cycle of 50 seconds, to manufacture an ISO multipurpose test specimen (4 mm thick).

### <Bending Test>

An 80 mm × 10 mm × 4 mm thick flat test specimen was manufactured from the aforementioned ISO multipurpose test specimen, and subjected to measurement of flexural strength and flexural modulus in compliance with ISO 178. The results were given in MPa.

Also retention rate of flexural strength was estimated. More specifically, a value of flexural strength relative to a value of a control, assumed as 100, was determined as the retention rate (%) of flexural strength as summarized in Tables, in which Examples 1-1 to 1-12 and Comparative Examples 1-1 to 1-4 were judged relative to Comparative Example 1-1 as the control; Examples 2-1, 2-2 and Comparative Examples 2-1 to 2-3 were judged relative to Comparative Example 2-1 as the control; and Examples 3-1, 3-2 and Comparative Examples 3-1 to 3-3 were judged relative to Comparative Example 3-1 as the control.

### <Charpy Impact Strengths

The ISO multipurpose test specimen thus obtained above was subjected to measurement of Charpy impact strength (notched and unnotched) at 23°C in compliance with ISO 179-1 and ISO 179-2. The results were given in kJ/m².

### <DTUL (Deflection Temperature under Load)>

The ISO multipurpose test specimen thus obtained above was subjected to measurement of deflection temperature under load in compliance with ISO 75-1 and ISO 75-2, at 23°C, under a load of 1.80 MPa (method A). The results were given in °C.

**[Table 2]**

| Raw material | | | Comparative Example 1-1 | Comparative Example 1-2 | Comparative Example 1-3 | Comparative Example 1-4 | Example 1-1 | Example 1-2 |
|---|---|---|---|---|---|---|---|---|
| PC resin | A1 | A1 | 100 | 100 | | | | |
| | A2 | A2-1 | | | 100 | 100 | 100 | 50 |
| | | A2-2 | | | | | | 50 |
| | | A2-3 | | | | | | |
| | A3 | A3-1 | | | | | | |
| | | A3-2 | | | | | | |
| Carbon fiber | B1 | B1-1 | 25 | | 25 | | | |
| | | B1-2 | | | | 25 | | |
| | B2 | B2 | | 30 | | | 30 | 30 |
| Flow modifier | C | C | | | | | | |
| Mold releasing agent | D | D | | | | | | |
| Carbon black | E | E | | | | | | |
| CF content [% by mass] | | | 20 | 20 | 20 | 20 | 20 | 20 |
| Terminal hydroxy group content in PC [ppm] | | | 140 | 140 | 530 | 530 | 530 | 560 |
| CF feedability during compounding | | | A | A | A | B | A | A |
| Flexural strength [MPa] | | | 225 | 192 | 230 | - | 203 | 208 |
| Retention rate of flexural strength relative to Compartive Example 1-1 [%] | | | 100 | 85 | 102 | - | 90 | 92 |
| Flexural modulus [MPa] | | | 13900 | 13200 | 14400 | - | 13400 | 13600 |
| Charpy notched impact strength [kJ/m²] | | | 5 | 5 | 6 | - | 5 | 5 |
| Charpy unnotched impact strength [kJ/m²] | | | 33 | 30 | 35 | - | 33 | 33 |
| DTUL (1.80 MPa) [°C] | | | 147 | 149 | 144 | - | 146 | 146 |

**[Table 3-1]**

| Raw material | | | Example 1-3 | Example 1-4 | Example 1-5 | Example 1-6 | Example 1-7 | Example 1-8 |
|---|---|---|---|---|---|---|---|---|
| PC resin | A1 | A1 | | | | | | |
| | A2 | A2-1 | | | | | | |
| | | A2-2 | 100 | 75 | 50 | | 100 | 100 |
| | | A2-3 | | | | | | |
| | A3 | A3-1 | | 14 | 28 | 55 | | |
| | | A3-2 | | 11 | 22 | 45 | | |
| Carbon fiber | B1 | B1-1 | | | | | | |
| | | B1-2 | | | | | | |
| | B2 | B2 | 30 | 30 | 30 | 30 | 32 | 34 |
| Flow modifier | C | C | | | | | 7 | 15 |
| Mold releasing agent | D | D | | | | | | |
| Carbon black | E | E | | | | | | |
| CF content [% by mass] | | | 20 | 20 | 20 | 20 | 20 | 20 |
| Terminal hydroxy group content in PC [ppm] | | | 590 | 598 | 602 | 615 | 590 | 590 |
| CF feedability during compounding | | | A | A | A | A | A | A |
| Flexural strength [MPa] | | | 210 | 206 | 203 | 196 | 211 | 212 |
| Retention rate of flexural strength relative to Compartive Example 1-1 [%] | | | 93 | 92 | 90 | 87 | 94 | 94 |
| Flexural modulus [MPa] | | | 13900 | 13700 | 13600 | 13400 | 14100 | 14300 |
| Charpy notched impact strength [kJ/m²] | | | 5 | 5 | 5 | 5 | 5 | 4 |
| Charpy unnotched impact strength [kJ/m²] | | | 33 | 33 | 33 | 30 | 32 | 31 |
| DTUL (1.80 MPa) [°C] | | | 146 | 145 | 145 | 145 | 142 | 140 |

**[Table 3-2]**

| Raw material | | | Example 1-9 | Example 1-10 | Example 1-11 | Example 1-12 |
|---|---|---|---|---|---|---|
| PC resin | A1 | A1 | | 50 | 25 | |
| | A2 | A2-1 | | 50 | 75 | 43.75 |
| | | A2-2 | 100 | | | |
| | | A2-3 | | | | 56.25 |
| | A3 | A3-1 | | | | |
| | | A3-2 | | | | |
| Carbon fiber | B1 | B1-1 | | | | |
| | | B1-2 | | | | |
| | B2 | B2 | 30 | 30 | 30 | 30 |
| Flow modifier | C | C | | | | |
| Mold releasing agent | D | D | 0.7 | | | |
| Carbon black | E | E | 0.3 | | | |
| CF content [% by mass] | | | 20 | 20 | 20 | 20 |
| Terminal hydroxy group content in PC [ppm] | | | 590 | 335 | 433 | 738 |
| CF feedability during compounding | | | A | A | A | A |
| Flexural strength [MPa] | | | 208 | 195 | 197 | 202 |
| Retention rate of flexural strength relative to Compartive Example 1-1 [%] | | | 92 | 87 | 88 | 90 |
| Flexural modulus [MPa] | | | 13900 | 13300 | 13500 | 13400 |
| Charpy notched impact strength [kJ/m²] | | | 5 | 5 | 5 | 5 |
| Charpy unnotched impact strength [kJ/m²] | | | 29 | 32 | 32 | 33 |
| DTUL (1.80 MPa) [°C] | | | 146 | 147 | 146 | 146 |

**[Table 4]**

| Raw material | | | Comparative Example 2-1 | Comparative Example 2-2 | Comparative Example 2-3 | Example 2-1 | Example 2-2 |
|---|---|---|---|---|---|---|---|
| PC resin | A1 | A1 | 100 | 100 | | | |
| | A2 | A2-1 | | | 100 | 100 | |
| | | A2-2 | | | | | 100 |
| Carbon fiber | B1 | B1-1 | 11 | | 11 | | |
| | B2 | B2 | | 13 | | 13 | 13 |
| CF content [% by mass] | | | 10 | 10 | 10 | 10 | 10 |
| Terminal hydroxy group content in PC [ppm] | | | 140 | 140 | 530 | 530 | 590 |
| CF feedability during compounding | | | A | A | A | A | A |
| Flexural strength [MPa] | | | 180 | 153 | 187 | 163 | 168 |
| Retention rate of flexural strength relative to Compartive Example 2-1 [%] | | | 100 | 85 | 104 | 91 | 93 |

**[Table 5]**

| Raw material | | | Comparative Example 3-1 | Comparative Example 3-2 | Comparative Example 3-3 | Example 3-1 | Example 3-2 |
|---|---|---|---|---|---|---|---|
| PC resin | A1 | A1 | 100 | 100 | | | |
| | A2 | A2-1 | | | 100 | 100 | |
| | | A2-2 | | | | | 100 |
| Carbon fiber | B1 | B1-1 | 43 | | 43 | | |
| | B2 | B2 | | 53 | | 53 | 53 |
| CF content [% by mass] | | | 30 | 30 | 30 | 30 | 30 |
| Terminal hydroxy group content in PC [ppm] | | | 140 | 140 | 530 | 530 | 590 |
| CF feedability during compounding | | | A | A | A | A | A |
| Flexural strength [MPa] | | | 241 | 201 | 251 | 213 | 220 |
| Retention rate of flexural strength relative to Compartive Example 3-1 [%] | | | 100 | 83 | 104 | 88 | 91 |

As is clear from the results, the compositions that contain the recycled carbon fiber, with use of the polycarbonate resin having a terminal hydroxy group content 200 to 800 ppm, were found to effectively suppress the flexural strength compared to virgin carbon fiber from degrading, meaning excellence of retention rate of flexural strength, as compared with the case where the polycarbonate resin having a terminal hydroxy group content of less than 200 ppm was used.

For example, comparison between Comparative Example 1-1 and Comparative Example 1-2 teaches that use of the polycarbonate resin having a terminal hydroxy group content of less than 200 ppm, with the recycled carbon fiber mixed therein, demonstrated a retention rate of flexural strength of 85%, relative to the case where the virgin carbon fiber was mixed. In contrast, comparison between Comparative Example 1-1 and Example 1-1 teaches that use of the polycarbonate resin having a terminal hydroxy group content of 200 to 800 ppm, with the recycled carbon fiber mixed therein, demonstrated a retention rate of flexural strength of 90%, relative to the case where the virgin carbon fiber was mixed. The compositions of Examples were also found to achieve physical properties including Charpy notched impact strength, Charpy unnotched impact strength, and deflection temperature under load (DTUL), which were considerably close to those of the case where the virgin carbon fiber was used.

In contrast, Comparative Example 1-4 having the virgin carbon fiber washed with a solvent to remove the sizing agent, and also free of the resin residue, was found to largely fluctuate feeding of the carbon fiber during compounding, making the feeding unstable, and making compounding not possible.

## Claims

1. A composition comprising:
100 parts by mass of a polycarbonate resin having a terminal hydroxy group content of 150 to 800 ppm; and
5 to 65 parts by mass of a recycled carbon fiber which is a heated product of a carbon fiber-reinforced resin.

2. The composition of claim 1, wherein the terminal hydroxy group content is 200 to 800 ppm.

3. The composition of claim 1 or 2, wherein a ratio of the resin residue content in the recycled carbon fiber is 5% by mass or larger.

4. The composition of any one of claims 1 to 3, wherein flexural strength, measured in compliance with ISO 178, of an ISO multipurpose test specimen formed of the composition is retained by a retention rate of 86% or larger, as compared with flexural strength, measured in compliance with ISO 178, of an ISO multipurpose test specimen formed of a composition that is modified from the aforementioned composition by replacing the polycarbonate resin with an equal amount of a polycarbonate resin having a terminal hydroxy group content of 140 ppm, and by replacing the recycled carbon fiber with a virgin carbon that makes the carbon fiber content equal.

5. The composition of any one of claims 1 to 4, wherein the polycarbonate resin contains a recycled polycarbonate resin.

6. The composition of any one of claims 1 to 5, further comprising 0.5 to 30 parts by mass of a flow modifier, per 100 parts by mass of the polycarbonate resin having a terminal hydroxy group content of 150 to 800 ppm.

7. The composition of any one of claims 1 to 6, further comprising 0.1 to 10 parts by mass in total of at least one selected from mold releasing agent and carbon black, per 100 parts by mass of the polycarbonate resin having a terminal hydroxy group content of 150 to 800 ppm.

8. A pellet formed of the composition described in any one of claims 1 to 7.

9. A molded article formed of the composition described in any one of claims 1 to 7.

10. A method for producing a composition comprising:
feeding to an extruder 100 parts by mass of a polycarbonate resin having a terminal hydroxy group content of 150 to 800 ppm, and 5 to 65 parts by mass of a recycled carbon fiber which is a heated product of a carbon fiber-reinforced resin, followed by melt kneading.
